# EUROPEAN PATENT SPECIFICATION

(11) **EP 2 766 760 B1**
(45) Date of publication and mention of the grant of the patent: **29.04.2020**
(21) Application number: 12778905.5
(22) Date of filing: 11.10.2012
(51) Int. Cl.: G02B 6/44

(54) **METHODS OF MAKING AND ACCESSING CABLES HAVING ACCESS FEATURES**
VERFAHREN ZUR HERSTELLUNG VON UND ZUM ZUGRIFF AUF KABELN MIT ZUGANGSMÖGLICHKEITEN
PROCÉDÉS DE FABRICATION ET D'ACCÈS À DES CÂBLES POSSÉDANT DES CARACTÉRISTIQUES D'ACCÈS

(30) Priority: 13.10.2011 US 201161546597 P
(43) Date of publication of application: 20.08.2014
(73) Proprietor: Corning Optical Communications LLC, Charlotte, NC 28216 (US)
(72) Inventor: BRINGUIER, Anne, Germaine, Taylorsville, NC 28681 (US); GIMBLET, Michael, J., Conover, NC 28613 (US); GREENWOOD, Julian, Latelle,III, Hickory, NC 28602 (US); NAVÉ, Samuel, Don, Newton, NC 28658 (US)
(74) Representative: Sturm, Christoph
(86) International application number: PCT/US2012/059651
(87) International publication number: WO 2013/055855

(56) References cited:
- WO-A2-2011/109498
- GB-B- 2 355 335
- US-A1- 2006 045 443

## Description

### RELATED APPLICATIONS

This application is a continuation of International Application No. PCT/US12/59651, filed October 11, 2012, which claims the benefit of priority to U.S. Application No. 61/546,597, filed October 13, 2011.

This application is related to PCT/US 11/34309 filed April 28, 2011, and to US Prov. App. No. 61/407,744 filed October 28, 2010 and to U.S. Prov. App. No. 61/416,684 filed November 23, 2010.

### BACKGROUND

### Field of the Disclosure

A fiber optic cable is disclosed, specifically a fiber optic cable having access features for accessing a core of the fiber optic cable.

### Technical Field

Fiber optic cables frequently require that the fibers inside are accessed mid-span rather than at an end of the cable. This often requires extensive cutting of the cable jacket to enable a portion of the jacket to be removed, allowing access to the fibers inside the jacket. Conventional cutting tools, such as box cutters or custom cutting tools, can be cumbersome and dangerous, both to the operator and to the delicate optical fibers. Rip cords in a cable jacket can be used for cable access, but they add cost and require time and training in order for the craftsman to use them properly. In one conventional access process, a jacket is pierced using a first tool, and a second tool is used to "fish" out enough of the rip cord so that a third tool (e.g., pliers) can grasp the rip cord. A pull force must then be applied to the rip cord, tearing it through the jacket material. The jacket material is then peeled away from the cable core and removed. If the rip cord breaks, the cord must be "fished" out again.

US 2006/0045443 A1 discloses a fiber optic cable having a core comprising an optical fiber and a jacket surrounding the core, wherein the jacket has an interior surface and an exterior surface, and wherein the jacket comprises a discontinuity extending lengthwise along the cable.

### BRIEF DESCRIPTION OF THE DRAWINGS

According to common practice, the various features of the drawings discussed below are not necessarily drawn to scale. Dimensions of various features and elements in the drawings may be expanded or reduced to more clearly illustrate the embodiments of the invention.
**FIG. 1** is a partial cutaway view of a fiber optic cable according to a first embodiment.
**FIG. 2** is a cross-section of the cable jacket illustrated in **FIG. 1****.**
**FIG. 3** is an isolated cross-sectional view of one of the discontinuities in the cable jacket of **FIG. 2****.**
**FIG. 4** is a cutaway view of a portion of a coextrusion apparatus used to manufacture cables with discontinuities.
**FIGS. 5A-5C** illustrate a process for accessing the end of a cable as illustrated in **FIG. 1****.**
**FIGS. 6A-6C** illustrate a process for mid-span access for a cable as illustrated in **FIG. 1****.**
**FIGS. 7A-7B** illustrate a method of manually determining peel force in the cable of **FIG.1****.**
**FIG. 8** illustrates a method of determining peel force in the cable of **FIG.1** using a force measuring machine.

### DETAILED DESCRIPTION

Reference is now made in detail to the present preferred embodiments of the disclosure, examples of which are illustrated in the accompanying drawings. Whenever possible, identical or similar reference numerals are used throughout the drawings to refer to identical or similar parts.

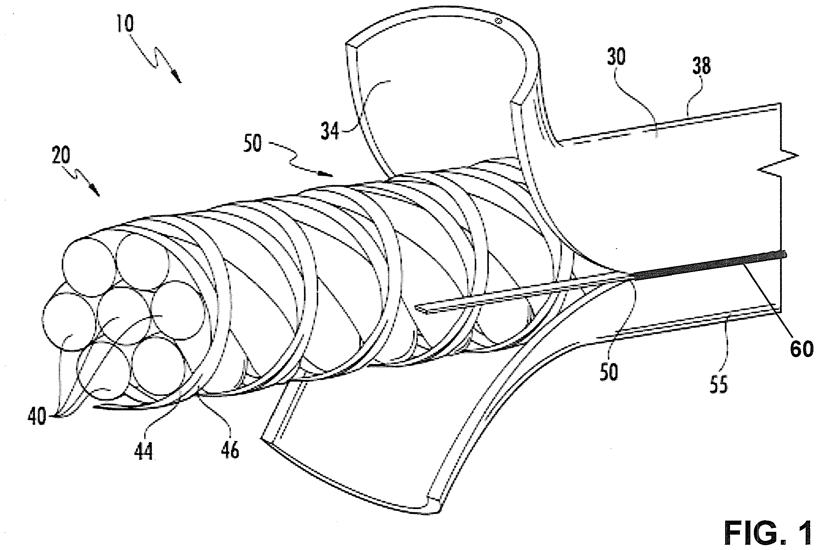

**FIG. 1** is a partial cutaway view of a fiber optic cable **10** according to a present embodiment. The cable **10** comprises a core **20** surrounded by a jacket **30.** The jacket **30** has an interior surface **34** that faces the core **20,** and an exterior surface **38.** The jacket **30** can be formed primarily from polymer materials, and can be generally referred to as "polymeric." In this specification, the terms "polymer" and "polymeric" indicate materials comprised primarily of extrudable polymer materials such as, for example, copolymers, but allows for the presence of non-polymer materials such as additives and fillers. The core **20** can be, for example, an assembly or arrangement having data-transmission and/or power-transmission capabilities. In the illustrated embodiment, the core **20** includes a bundle of optical fibers **40** bundled within contrahelically wound binders **44, 46,** the optical fibers being capable of conveying optical data.

The jacket **30** includes a separation feature that facilitates access to the core **20.** In the exemplary embodiment, the separation feature is a pair of extruded discontinuities **50** that extend along the length of the cable **10.** In this specification, the term "discontinuity" indicates a portion of the jacket **30** of different material composition than the main portion of the jacket **30,** the main portion being indicated by reference number **55.** The main portion **55** can essentially be an annular hoop surrounding the core **20,** with the discontinuities **50** extending longitudinally through the main portion **55** along a selected length of the cable **10.** According to one aspect, the discontinuities **50** provide lines of weakness that allow the jacket **30** to be separated as shown in **FIG. 1****.** The illustrated discontinuities **50** extend along the entire cable length, although shorter lengths, such as 20 cm or more, may be used to provide access to the core **20.**

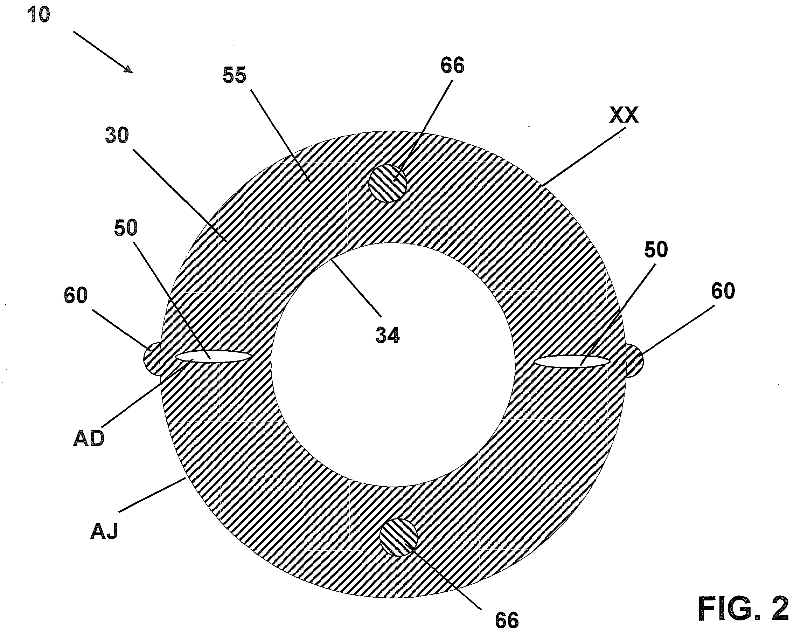

**FIG. 2** is a cross-section of the jacket **30** in isolation, taken on a plane perpendicular to a length of the cable **10.** In the exemplary embodiment, the discontinuities **50** are bonded to the main portion of the jacket **55** when the jacket **30** is extruded. The illustrated discontinuities **50** are wholly embedded in the main portion **55,** but one or both ends of the discontinuities may extend to either jacket surface. The main portion **55** and the discontinuities **50** can be formed from extrudable polymers, so that as the extrudates used to form the main portion **55** and the discontinuities **50** cool and solidify, the extrudates become bonded to a desired degree at an interface on each side of a discontinuity **50.** When the discontinuities **50** are formed while extruding the main portion **55** of the jacket, the bond between discontinuity **50** and the remainder of the jacket **30** can be generally described as enabled by polymer chain entanglement as the jacket **30** solidifies. The jacket **30** accordingly comprises a cohesive composite polymer structure. The cable jacket **30** can also include tactile locator features **60,** such as raised surfaces, or 'bumps', or depressed surfaces such as 'divots' or channels, that provide a tactile indication of the location of the discontinuities. A visual indication such as a stripe could also be extruded over the location of the discontinuities so that their locations are apparent from the cable exterior. Tactile or visual indicators can extend along the entire length of the cable, or along selected lengths. One or more strength members, such as glass-reinforced plastic (GRP) rods or metallic wires can be included at one or more locations in the jacket **30.**

The discontinuities **50** can be strips that may each occupy up to, for example, 5% of the total jacket cross-sectional area **AJ.** In exemplary embodiments, discontinuities **50** can be relatively narrow strips in the jacket **30,** and may occupy relatively small portions of the jacket cross-sectional area **AJ.** For example, the discontinuities **50** can have cross-sectional areas **AD** that are less than 3% of **AJ.** In the illustrated embodiment, the discontinuities **50** each have cross-sectional areas **AD** that are less than 2% of **AJ.** In **FIGS. 1** and **2****,** two discontinuities **50** are formed in the jacket **30** to facilitate opening of the jacket as shown in **FIG. 1****.** Depending on the form that the core **20** takes, the number, spacing, shape, composition and other aspects of the discontinuities **50** can be varied. For example, a single discontinuity in the jacket **30** may be sufficient to allow the cable jacket **30** to be peeled away from the core **20.**

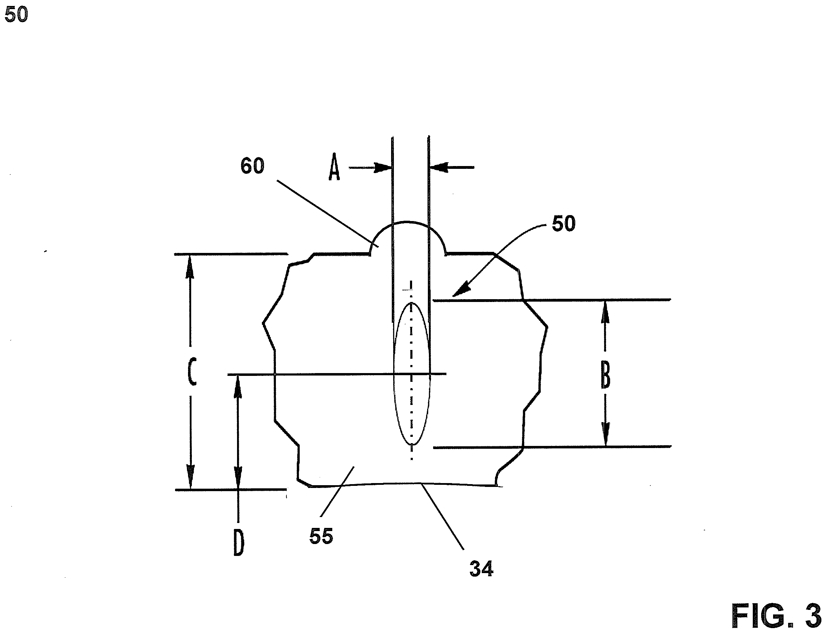

**FIG. 3** is an isolated view of one of the discontinuities **50** in the jacket **140.** A discontinuity **180** can have a maximum width **A,** a height **B,** and a center spacing from the jacket interior surface **34** of **D.** The jacket thickness is **C.** According to one aspect, the aspect ratio A:B is in the range of 1:4 to 1:100. In general, lower aspect ratios A:B, which indicates narrower discontinuities, are favorable in cable cross-sections as shown in **FIG. 1****.** It is these discontinuities that allow for a stress concentration to develop at the root of a discontinuity and thus initiate failure of the primary jacket material. The illustrated ratio B:C is about 1:2, which indicates that the height of a discontinuity is about half of the jacket thickness. The ratio B:C is selected to provide ease of access to the core and to maintain sufficient robustness of the cable **110,** and will vary with factors such as the fracture toughness of the material of the primary portion **55,** the bond between the discontinuities **50** and the primary portion **55,** and other factors. According to one embodiment, the ratio B:C is at least 1:4, or, stated alternatively, B is at least ¼ of the jacket thickness C at the centerline of the cable. If an extremely thin, "film" type embodiment of discontinuity **50** is included, the maximum width **W** of a discontinuity can be in the range of 0.2 mm or less, and may be about 0.1 mm.

The materials and processes used to form the main portion **55** and the discontinuities **50** can be selected so that the interfaces therebetween allow for relatively easy access to the core **20** by peeling back the jacket **30** as shown in **FIG. 1****.** The cable **10** may be constructed to meet other requirements for robustness, such as requirements for the jacket **30** stay intact under tensile loads, twisting, in temperature variations, and when subjected to other known cable test criteria, such as, for example, ICEA 460, and GR20.

The cable jacket main portions **55** and the discontinuities **50** described in this specification may be made from various polymer materials. Either the main portion **55** or the discontinuities **50** may be made from polypropylene (PP), polyethylene (PE), or blends of materials such as a blend of PE and ethylene vinyl acetate (EVA), flame-retardant material such as flame-retardant polyethylene, flame-retardant polypropylene, polyvinyl chloride (PVC), or polyvinylidene fluoride (PVDF), filled materials such as polybutylene terephthalate (PBT), a polycarbonate and/or a polyethylene (PE) material and/or an ethylene vinyl acrylate (EVA) or other blends thereof having fillers like a chalk, talc, or the like, and other materials such as a UV-curable acrylates.

In the exemplary embodiments, the main portion can be extruded from a first extrudable polymeric material comprising at least 80% of a first polymer, polyethylene, by weight, and the discontinuities can be extruded from a second extrudable polymeric material comprising at least 70% of a second polymer, polypropylene, by weight and additionally at least 0.5% of the first polymer polyethylene by weight. Higher amounts by weight of the first polymer may be included in the second material, such as at least 1.0%, or at least 2%. Without being bound by theory, Applicants believe the bond between polypropylene and polyethylene may be caused by one or both of quantities of ethylene that are compounded in the polypropylene bonding with the polyethylene, and molecular entanglement between the PE and PP. According to this understanding, the amount of ethylene in the PP extrudate can be increased to increase the bond between the discontinuities and the remainder of the jacket. In one embodiment, the main portion **55** is made from a first polyethylene extruded material, such as a medium density polyethylene (MDPE). The discontinuities **50** are made from a second, polypropylene/polyethylene blend of extruded material, the blend including from 6% to 20% polyethylene, with the remainder of the blend being primarily a polypropylene material. The first polymer material can be, for example, a unimodal or bimodal type polyethylene defined by its molecular weight distribution, with the lower molecular weight polymer chains increasing bond strength at the interface of the jacket and the feature (through the process of promoting entanglements and co-crystallization).

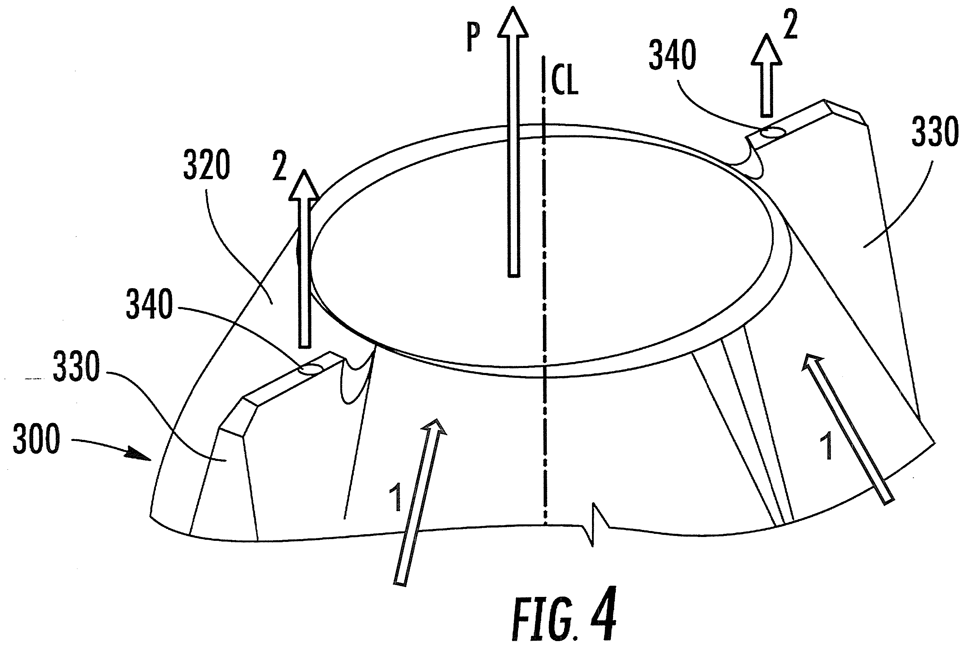

**FIG. 4** is a cutaway section view of a coextrusion flow diverter **300** that can be used in conjunction with an extrusion crosshead commonly used to form an annular jacket such as the jacket **30** shown in **FIG. 2****.** The flow diverter can be a modification of an existing component of an extrusion apparatus. In such an extrusion apparatus, the extrusion tip and die are directly downstream of flow diverter **300.** The arrows **1** in **FIG. 4** illustrate the flow direction of a first molten extrudate, and the arrows **2** indicate the flow direction of a second molten extrudate. The flow diverter **300** has an exterior surface **320** over which flows the first molten extrudate material that is used to form the main portion **55** of the jacket **30.** The diverter **300** includes a pair of struts or fins **330,** each having a port **340** that allows introduction of the second molten extrudate material used to form the discontinuities **50** into the flow of the first molten extrudate. The flow diverter **300** acts to divide the first material around the ports **340** supplying the second material. The first and second extrudate materials join downstream of the flow diverter **300.** As the first and second materials are extruded, a core (not shown) including one or more optical fibers advances along the center line CL in the process direction **P.** The first and second extrudate materials draw down, cool, and solidify around the fiber optic core advancing through the crosshead to form the jacket **30.** The tactile locator features **60** can be included by forming an exterior radius in the extrusion die. If desired, strength members, such as the strength members **66,** can be introduced into the extrusion process and embedded in the jacket **30.**

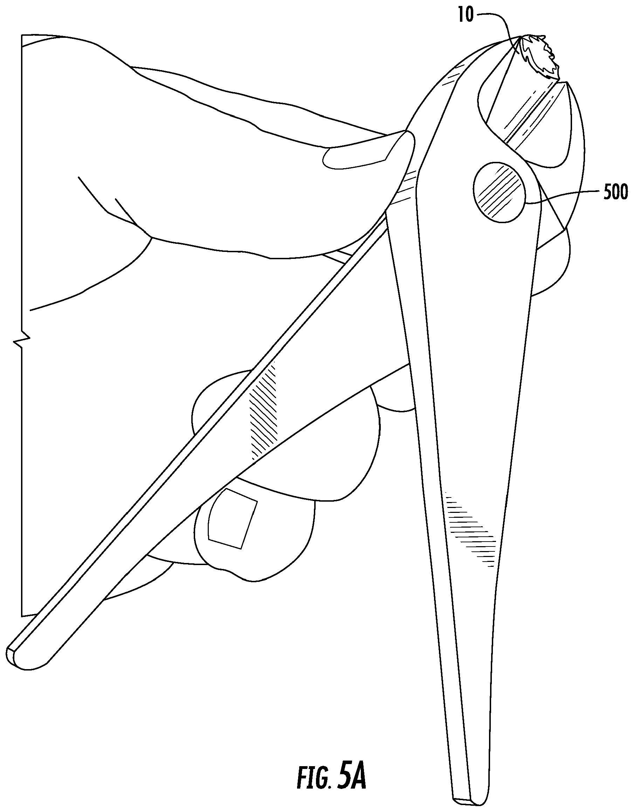

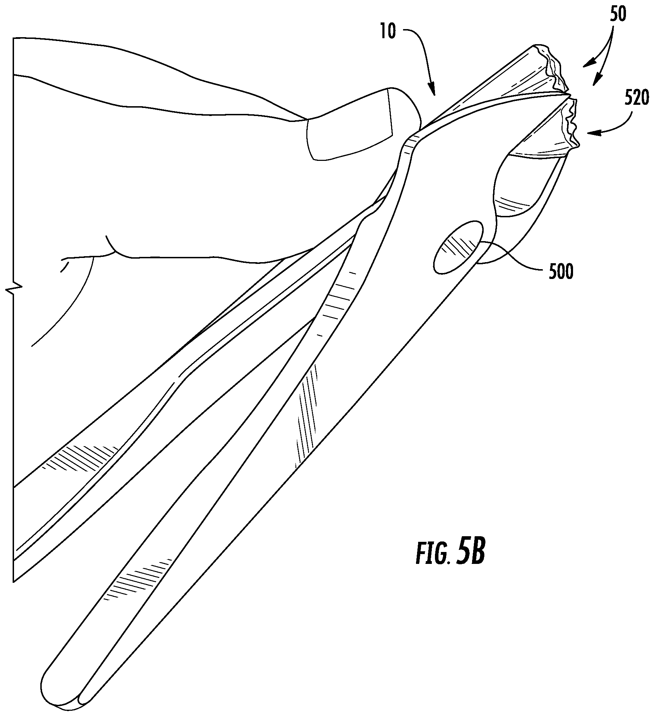

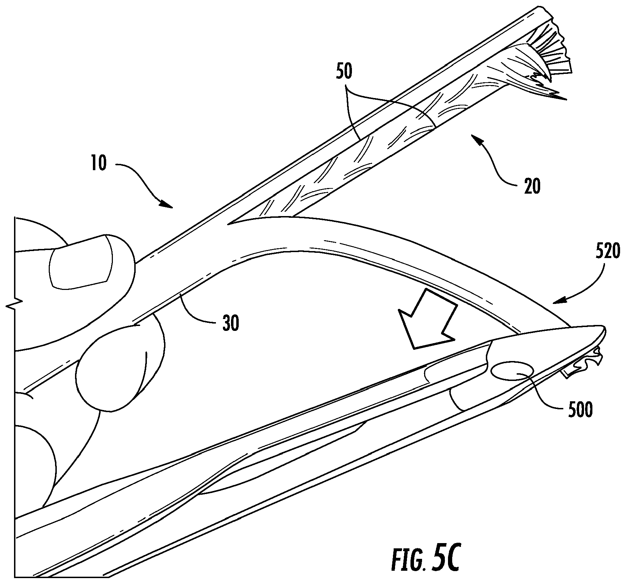

**FIGS. 5A-5C** illustrate a process for accessing the end of a cable as illustrated in **FIG. 1****.** Referring to **FIG. 5A****,** a technician uses a tool **500** such as side cutters or pliers to pinch the cable is pinched across less than 180 degrees of arc of the cable exterior, such as between of the features **60.** The blades of the tool **500** are oriented to pinch the same side of the cable **10,** as delineated by the locator features **60.** Pinching one side of the cable **10** causes the cable jacket **30** to begin separating at the discontinuities **50.** Referring to **FIG. 5B****,** after separation is initiated, a section **520** of the jacket **30** located between the discontinuities **50** is pulled away from the remainder of the jacket **30.** Tearing can be facilitated by twisting the section **520.** Referring to **FIG. 5C****,** the technician tears the section **520** for a desired length using the tool **500.** The core **20** is then accessible for connectorization, etc.

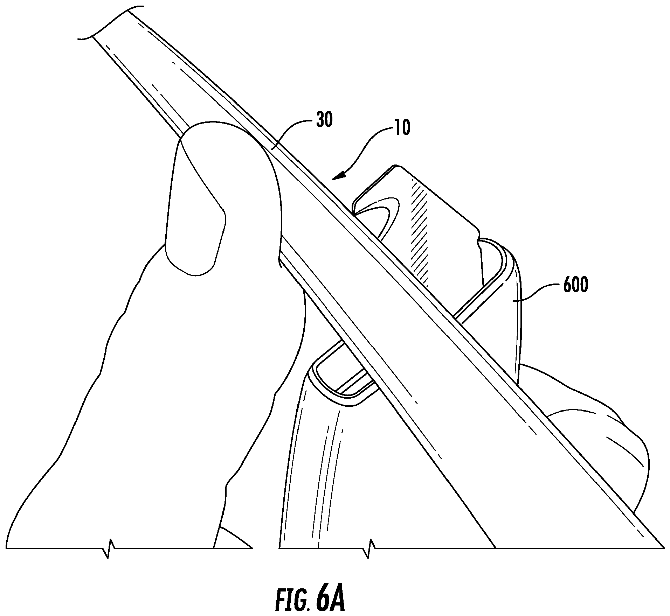

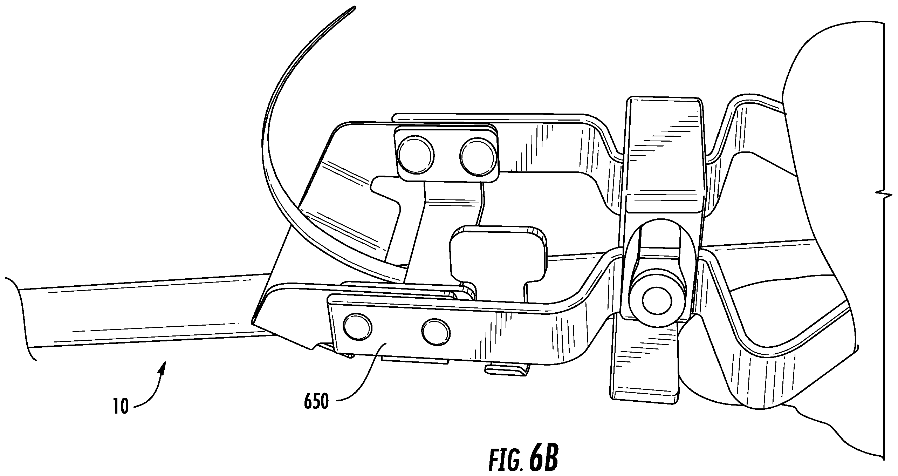

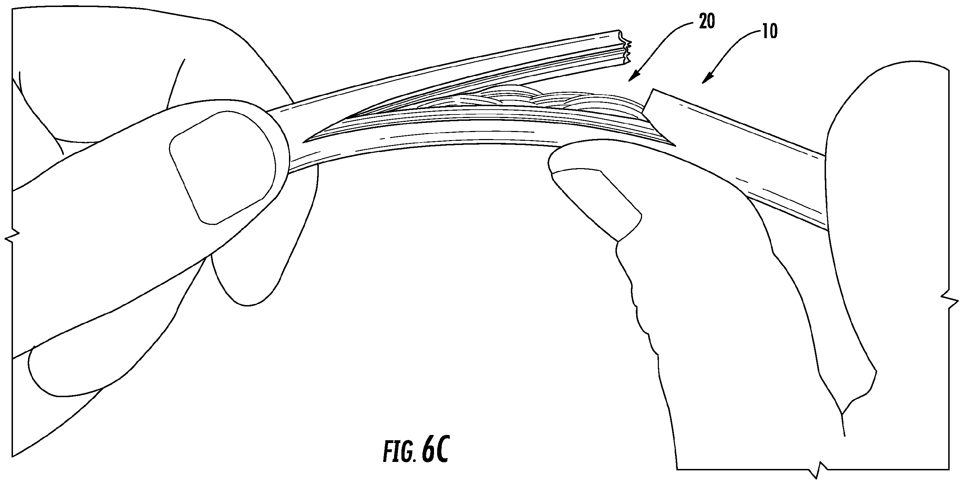

**FIGS. 6A-6C** illustrate a process for mid-span access for a cable as illustrated in **FIG. 1****.** Referring to **FIG. 6A****,** a technician uses a razor tool **600** to form a ring cut in the jacket **30** that is approximately ¾ of the jacket thickness. The cable **10** is then flexed to break the remaining jacket material. While a razor blade tool is used in this step, it is the sole step in which a very sharp bladed tool is used, as opposed to multiple steps in conventional access methods. Referring to **FIG. 6B****,** the technician shaves the jacket at each of the two locator features **60** with a sheath removal tool **650.** The tool can be, for example, Corning Cable Systems' Cable Sheath Removal Tool, Catalog #RPXS-000. The jacket **30** only needs to be shaved for approximately six inches, on only one side of the ring cut line. Referring to **FIG. 6C****,** the cable **10** is flexed to initiate the separation of the two jacket halves. The core **20** is then accessible for connectorization, etc.

According to the present embodiments, one or more discontinuities in a cable jacket can be arranged to provide relatively easy access to a cable core. The ease of access can be defined, for example, by the force required to pull, or peel away a section of the cable jacket at one or more discontinuities. The peel force can be measured as a direct force measurement, in Newtons, of the force a person must exert as the jacket section is peeled away from the cable core. It is understood that the jacket will not be perfectly uniform, and that a person or machine cannot exert a perfectly uniform force as the jacket is peeled, so "peel forces" described in this specification indicate an average force exerted as a distance of the jacket section is peeled back. It is also understood that peel forces according to the present embodiments are measured without any additional modifications to the cable jacket exterior, such as by scoring. The peel forces can be relatively low when compared to the forces required to access a cable without extruded discontinuities. For example, a peel force may be less than about 90 Newtons (N). In exemplary embodiments, the peel force required may be from about 20N to about 65N. Peel forces are defined herein to include any force great enough to cause the jacket material to rip, tear, or otherwise separate along the discontinuities **50** for accessing the cable core.

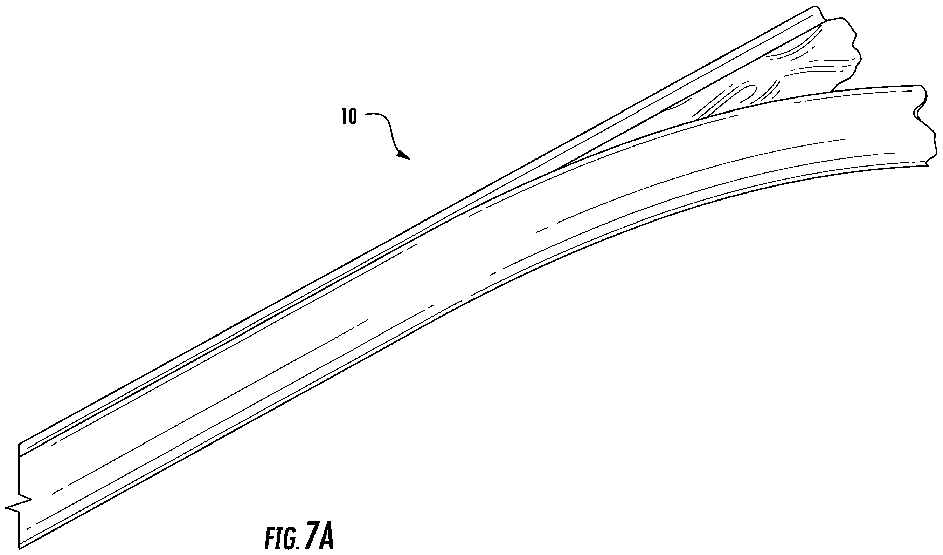

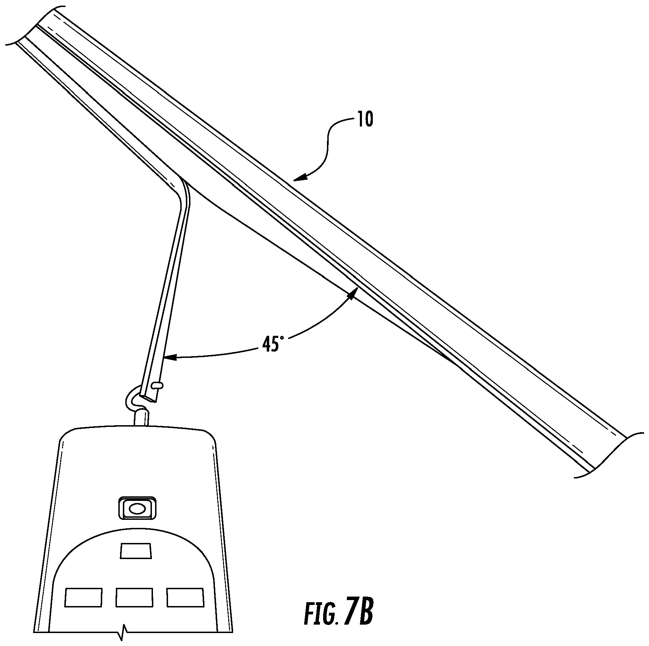

It is relatively easy to measure peel force. **FIGS. 7A** and **7B** steps in a method of illustrating peel force in the cable **10** of **FIG.1****.** Using cable **10** as a reference, about 25 mm of jacket is cut away from one end of the cable **10.** The ends of the cable **10** are secured to a bench or other sturdy surface. A small hole is placed in the jacket proximal to the edge of the jacket where it was cut away from the core, as shown in **FIG. 7A****,** and one end of an "S" hook is inserted into the hole in the jacket. If the cable includes a pair of spaced discontinuities, the hole is formed midway between the two discontinuities. A lanyard or wire is attached to the other end of the S hook. The lanyard is fixed to a force gauge, such as a Chatillon gauge available from Ametek Test and Calibration Instruments of Largo, Florida. As shown in **FIG. 7B****,** the force gauge is pulled by hand or by some mechanical means, away from the cable at an angle of 45 degrees to the cable centerline, until the section of the jacket attached to the S hook peels away from the rest of the jacket. The jacket section is pulled for a distance of 250-500 mm away from the initial jacket removal location. The average peel can be calculated as the average force measured by the force gauge as the jacket section is pulled along the selected distance.

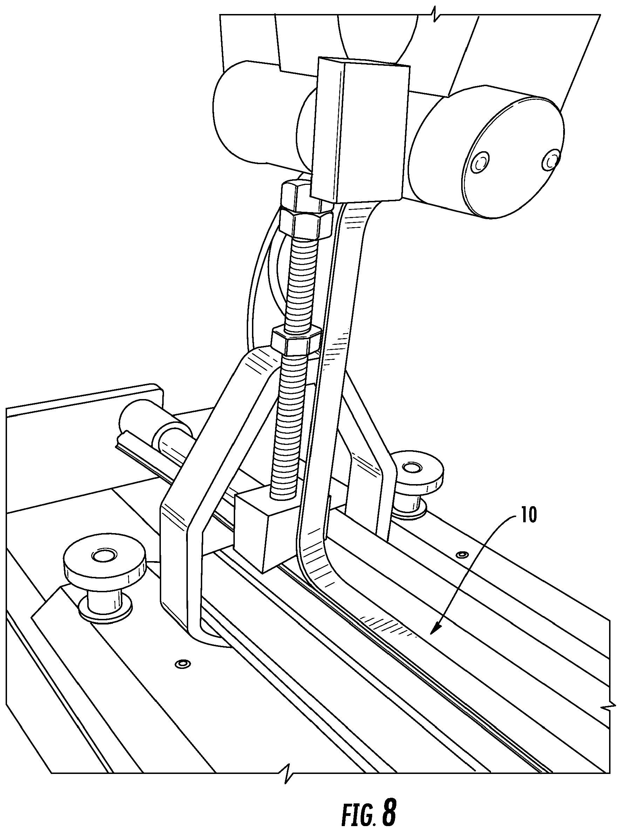

In an alternate method of measuring peel force, a force testing machine, such as those available from Instron®, pulls the section of cable away from the remainder of the cable at angle of 90 degrees to the remainder of the cable **10.** This machine is shown in **FIG. 8****.** The cable **10** is secured to a linear slide that translates the cable beneath the portion of the machine that is secured to the jacket section being peeled away. In this arrangement, the cable **10** slides beneath the force gauge that measures the tension on the section being removed, so that the section can be peeled away at a 90 degree angle. The tension in the removable section can be averaged over a desired distance to obtain the average peel force.

In general, the separation properties disclosed in this specification may be obtained by coextruding the discontinuities from a different material than the material used to form the main portion of the jacket. As an alternative method, the discontinuities may be made from the same material as the remainder of the jacket, but subjected to different curing conditions, for example.

## Claims

1. A fiber optic cable (10), having a core (20) comprising an optical fiber (40) and a jacket (30) surrounding the core (20), wherein the jacket (30) has an interior surface (34) that faces the core (20) and an exterior surface (38), wherein the jacket (30) is formed primarily from a polymer material, wherein the jacket (30) comprises:
a discontinuity (50) extending lengthwise along the cable (10) and wholly embedded in the jacket (30),
a tactile indicator (60) extending lengthwise along the exterior of the jacket (30) denoting the location of the wholly-embedded discontinuity (50) of the jacket (30),
wherein the discontinuity (50) comprises a portion of the jacket (30) of a different material composition than a main portion (55) of the jacket (30), the main portion (55) of the jacket (30) being an annular hoop surrounding the core (20), whereby the discontinuity (50) provides a line of weakness that allows the jacket (30) to be separated to provide access to the core (20),
wherein the main portion (55) of the jacket (30) is formed from a first material comprising at least 80% by weight of a first polymer, and wherein the discontinuity (50) is formed from a second material comprising at least 70% by weight of a second polymer and at least 0.5% by weight of the first polymer, thereby increasing bonding between the discontinuity (50) and the main portion (55) of the jacket (30), and
wherein the discontinuity (50) is bonded to the main portion (55) of the jacket (30) such that the jacket (30) comprises a cohesive composite polymer structure.

2. The fiber optic cable of claim 1, wherein the tactile indicator (60) comprises a tactile locator feature comprising at least one of a raised surface and a depressed surface on the exterior of the jacket (30) to provide tactile indication of the location of the discontinuity (50).

3. The fiber optic cable of claim 2, wherein the tactile locator feature (60) comprises a raised surface in the form of a bump to provide tactile indication of the location of the discontinuity (50).

4. The fiber optic cable of claim 3, wherein the bump extends along the entire length of the cable (10).

5. The fiber optic cable of any one of claims 1-4, wherein the discontinuity (50)has a maximum width and height, and wherein the ratio of the maximum width to the height of the discontinuity (50) is in the range of 1:4 to 1:100, thereby facilitating stress concentration at a root of the discontinuity (50).

6. The fiber optic cable of claim 5, wherein the ratio of the height of the discontinuity (50) to the overall thickness of the jacket is at least 1:4.

7. The fiber optic cable of claim 6, wherein the first polymer is polyethylene and the second polymer is polypropylene.

8. The fiber optic cable of any one of claims 1-7, wherein the discontinuity (50) is a first discontinuity and further comprising a second discontinuity wholly embedded in the jacket (30) and spaced apart from the first discontinuity such that a section of the jacket(30) is between the first and second discontinuities, and wherein a peel force is required to pull the section of the jacket (30) away from the remainder of the cable at an angle of 90-degrees to the remainder of the cable (10), and wherein the peel force is less than about 90 Newtons.

9. A method of making a cable (10), comprising:
advancing a core (20) in a first direction, the core (20) including at least one optical fiber (40) capable of conveying communication signals; and
extruding a jacket (30) around the core (20), the extruding comprising:
introducing a first polymeric extrudate material into the extrusion apparatus;
introducing a first flow of a second polymeric extrudate material into the first polymeric extrudate material through a first port;
introducing a second flow of extrudate material into the first polymeric extrudate material through a second port; and
allowing the first and second extrudate materials to draw down and cool around the core, the first polymeric extrudate material forming a main portion (55) of the jacket (30), the first flow forming a first discontinuity (50) in the main portion, and the second flow forming a second discontinuity (50) in the main portion, wherein the first and second discontinuities (50) are at least partially embedded in the main portion (55),
wherein the first extrudate material includes a first polymer and the second extrudate material includes second polymer, the second extrudate material further including between 1% to 20% by weight of the first polymer,
wherein a section of the jacket (30) located between the first and second discontinuities is separable from a remainder of the jacket by a peel force on the section of less than 90 Newtons;
the method further comprising forming at least one tactile location (60) feature proximate to at least one of the discontinuities (50).

10. The method of claim 9, wherein a cross-sectional area of each discontinuity (50) is less than 5% of a cross-sectional area of the jacket (30).

11. The method of claim 9, wherein the jacket (30) having an annular cross-section with an interior surface (34) and an exterior surface (38) with a jacket thickness therebetween from 0.5 mm to 2.0 mm, wherein a height of the first discontinuity (50) is at least four times greater than a maximum width of the first discontinuity (50), and wherein the first discontinuity (50) has a maximum width measured perpendicular to a radius passing through the first discontinuity (50) that is less than 0.2 mm.

12. The method of any one of claim 11, wherein the first polymer comprises polyethylene and the second polymer comprises polypropylene.

13. The method of any one of claims 9-12, further comprising advancing an elongate strength member along the first direction, and wherein the jacket (30) is extruded around the strength member, wherein the first discontinuity (50) is wholly embedded in the main portion (55).

## Patentansprüche

1. Glasfaserkabel (10), das einen Kern (20), der eine Glasfaser (40) umfasst, und eine Ummantelung (30), die den Kern (20) umgibt, aufweist, wobei die Ummantelung (30) eine Innenfläche (34), die dem Kern (20) zugewandt ist, und eine Außenfläche (38) aufweist, wobei die Ummantelung (30) primär aus Polymermaterial gebildet ist, wobei die Ummantelung (30) Folgendes umfasst:
eine Diskontinuität (50), die sich in Längsrichtung entlang des Kabels (10) erstreckt und in die Ummantelung (30) eingebettet ist,
einen taktilen Indikator (60), der sich in Längsrichtung entlang der Außenseite der Ummantelung (30) erstreckt, der die Position der vollständig eingebetteten Diskontinuität (50) der Ummantelung (30) kennzeichnet,
wobei die Diskontinuität (50) einen Abschnitt der Ummantelung (30) aus einer anderen Materialzusammensetzung als ein Hauptabschnitt (55) der Ummantelung (30) umfasst, wobei der Hauptabschnitt (55) der Ummantelung (30) einem ringförmigen Band entspricht, das den Kern (20) umgibt, wobei die Diskontinuität (50) eine Schwachstellenlinie bereitstellt, die der Ummantelung (30) erlaubt, abgetrennt zu werden, um Zugriff auf den Kern (20) bereitzustellen,
wobei der Hauptabschnitt (55) der Ummantelung (30) aus einem ersten Material gebildet ist, das mindestens 80 Gew.-% eines ersten Polymers umfasst, und wobei die Diskontinuität (50) aus einem zweiten Material gebildet ist, das mindestens 70 Gew.-% eines zweiten Polymers und mindestens 0,5 Gew.-% des ersten Polymers enthält, wodurch das Verbinden zwischen der Diskontinuität (50) und dem Hauptabschnitt (55) der Ummantelung (30) verbessert wird, und
wobei die Diskontinuität (50) mit dem Hauptabschnitt (55) der Ummantelung (30) verbunden ist, so dass die Ummantelung (30) eine zusammenhängende Verbundpolymerstruktur umfasst.

2. Glasfaserkabel nach Anspruch 1, wobei der taktile Indikator (60) ein taktiles Positionsgebermerkmal umfasst, das eine erhöhte Oberfläche und/oder eine vertiefte Oberfläche auf der Außenseite der Ummantelung (30) umfasst, um eine taktile Kennzeichnung für die Position der Diskontinuität (50) bereitzustellen.

3. Glasfaserkabel nach Anspruch 2, wobei das taktile Positionsgebermerkmal (60) eine erhöhte Oberfläche in der Form einer Unebenheit umfasst, um eine taktile Kennzeichnung für die Position der Diskontinuität (50) bereitzustellen.

4. Glasfaserkabel nach Anspruch 3, wobei sich die Unebenheit entlang der gesamten Länge des Kabels (10) erstreckt.

5. Glasfaserkabel nach einem der Ansprüche 1-4, wobei die Diskontinuität (50) eine maximale Breite und Höhe aufweist und wobei das Verhältnis der maximalen Breite zu der Höhe der Diskontinuität (50) im Bereich von 1:4 bis 1:100 liegt, wodurch eine Beanspruchungskonzentration auf einen Ursprung der Diskontinuität (50) erleichtert wird.

6. Glasfaserkabel nach Anspruch 5, wobei das Verhältnis der Höhe der Diskontinuität (50) zu der Gesamtdicke der Ummantelung mindestens 1:4 beträgt.

7. Glasfaserkabel nach Anspruch 6, wobei das erste Polymer Polyethylen entspricht und das zweite Polymer Polypropylen entspricht.

8. Glasfaserkabel nach einem der Ansprüche 1-7, wobei die Diskontinuität (50) einer ersten Diskontinuität entspricht und ferner eine zweite Diskontinuität umfasst, die vollständig in die Ummantelung (30) eingebettet ist und von der ersten Diskontinuität beabstandet ist, so dass sich ein Teilstück der Ummantelung (30) zwischen der ersten und der zweiten Diskontinuität befindet, und wobei eine Ablösekraft erforderlich ist, um das Teilstück der Ummantelung (30) von dem Rest des Kabels unter einem Winkel von 90 Grad zu dem Rest des Kabels (10) abzuziehen, und wobei die Ablösekraft kleiner als ungefähr 90 Newton ist.

9. Verfahren zum Herstellen eines Kabels (10), das Folgendes umfasst:
Vorschieben eines Kerns (20) in eine erste Richtung, wobei der Kern (20) mindestens eine Glasfaser (40) enthält, die Kommunikationssignale übermitteln kann; und
Extrudieren einer Ummantelung (30) um den Kern (20), wobei das Extrudieren Folgendes umfasst:
Einführen eines ersten Polymerextrudatmaterials in die Extrusionsvorrichtung;
Einleiten einer ersten Strömung eines zweiten Polymerextrudatmaterials in das erste Polymerextrudatmaterial durch eine erste Öffnung;
Einleiten einer zweiten Strömung eines Extrudatmaterials in das erste Polymerextrudatmaterial durch eine zweite Öffnung; und
Zulassen, dass das erste und das zweite Extrudatmaterial absinken und um den Kern herum abkühlen, wobei das erste Polymerextrudatmaterial einen Hauptabschnitt (55) der Ummantelung (30) bildet, die erste Strömung eine erste Diskontinuität (50) in dem Hauptabschnitt bildet und die zweite Strömung eine zweite Diskontinuität (50) in dem Hauptabschnitt bildet, wobei die erste und die zweite Diskontinuität (50) zumindest teilweise in den Hauptabschnitt (55) eingebettet sind,
wobei das erste Extrudatmaterial ein erstes Polymer enthält und das zweite Extrudatmaterial ein zweites Polymer enthält, wobei das zweite Extrudatmaterial ferner zwischen 1 bis 20 Gew.-% des ersten Polymers enthält,
wobei ein Teilstück der Ummantelung (30), das sich zwischen der ersten und zweiten Diskontinuität befindet, von einem Rest der Ummantelung durch eine Ablösekraft auf das Teilstück von weniger als 90 Newton abgetrennt werden kann;
wobei das Verfahren ferner das Bilden mindestens eines taktilen Positionsgebermerkmals (60) in der Nähe der mindestens einen Diskontinuität (50) umfasst.

10. Verfahren nach Anspruch 9, wobei eine Querschnittsfläche jeder Diskontinuität (50) kleiner als 5 % einer Querschnittsfläche der Ummantelung (30) ist.

11. Verfahren nach Anspruch 9, wobei die Ummantelung (30) einen ringförmigen Querschnitt mit einer Innenfläche (34) und einer Außenfläche (38) mit einer Ummantelungsdicke dazwischen von 0,5 mm bis 2 mm umfasst, wobei eine Höhe der ersten Diskontinuität (50) mindestens vier mal größer ist als eine maximale Breite der ersten Diskontinuität (50) und wobei die erste Diskontinuität (50) eine maximale Breite besitzt, die senkrecht zu einem Radius gemessen wird, der die erste Diskontinuität (50) durchläuft, die kleiner ist als 0,2 mm.

12. Verfahren nach Anspruch 11, wobei das erste Polymer Polyethylen umfasst und das zweite Polymer Polypropylen umfasst.

13. Verfahren nach einem der Ansprüche 9-12, das ferner das Vorschieben eines länglichen Festigkeitselements entlang der ersten Richtung umfasst, wobei die Ummantelung (30) um das Festigkeitselement extrudiert wird, wobei die erste Diskontinuität (50) vollständig in den Hauptabschnitt (55) eingebettet ist.

## Revendications

1. Câble à fibre optique (10), ayant une âme (20) comprenant une fibre optique (40) et une gaine (30) entourant l'âme (20), la gaine (30) ayant une surface intérieure (34) qui fait face à l'âme (20) et une surface extérieure (38), la gaine (30) étant principalement formée à partir d'un matériau polymère, la gaine (30) comprenant :
une discontinuité (50) s'étendant dans la longueur le long du câble (10) et entièrement intégrée dans la gaine (30),
un indicateur tactile (60) s'étendant dans la longueur le long de l'extérieur de la gaine (30) indiquant l'emplacement de la discontinuité entièrement intégrée (50) de la gaine (30),
dans lequel la discontinuité (50) comprend une partie de la gaine (30) dans une composition de matière différente de celle d'une partie principale (55) de la gaine (30), la partie principale (55) de la gaine (30) étant une bande annulaire entourant l'âme (20), moyennant quoi la discontinuité (50) fournit une ligne de faiblesse qui permet de séparer la gaine (30) pour donner accès à l'âme (20),
dans lequel la partie principale (55) de la gaine (30) est formée à partir d'un premier matériau comprenant au moins 80 % en poids d'un premier polymère, et dans lequel la discontinuité (50) est formée à partir d'un deuxième matériau comprenant au moins 70 % en poids d'un deuxième polymère et au moins 0,5 % en poids du premier polymère, renforçant ainsi la liaison entre la discontinuité (50) et la partie principale (55) de la gaine (30), et
dans lequel la discontinuité (50) est liée à la partie principale (55) de la gaine (30) de telle sorte que la gaine (30) comprend une structure polymère composite cohésive.

2. Câble à fibre optique de la revendication 1, dans lequel l'indicateur tactile (60) comprend un élément de localisation tactile comprenant une surface surélevée et/ou une surface en retrait sur l'extérieur de la gaine (30) pour fournir une indication tactile de l'emplacement de la discontinuité (50).

3. Câble à fibre optique de la revendication 2, dans lequel l'élément de localisation tactile (60) comprend une surface surélevée sous la forme d'une bosse qui fournit une indication tactile de l'emplacement de la discontinuité (50).

4. Câble à fibre optique de la revendication 3, dans lequel la bosse s'étend sur la totalité de la longueur du câble (10).

5. Câble à fibre optique de l'une quelconque des revendications 1 à 4, dans lequel la discontinuité (50) a une largeur maximale et une hauteur, et dans lequel le rapport entre la largeur maximale et la hauteur de la discontinuité (50) se situe dans la gamme de 1:4 à 1:100, facilitant ainsi la concentration des contraintes à une racine de la discontinuité (55).

6. Câble à fibre optique de la revendication 5, dans lequel le rapport entre la hauteur de la discontinuité (50) et l'épaisseur totale de la gaine est d'au moins 1:4.

7. Câble à fibre optique de la revendication 6, dans lequel le premier polymère est le polyéthylène et le deuxième polymère est le polypropylène.

8. Câble à fibre optique de l'une quelconque des revendications 1 à 7, dans lequel la discontinuité (50) est une première discontinuité, et comprenant en outre une deuxième discontinuité entièrement intégrée dans la gaine (30) et espacée de la première discontinuité de telle sorte qu'une section de la gaine (30) se situe entre la première et la deuxième discontinuité, et dans lequel une force de décollement est nécessaire pour retirer la section de la gaine (30) du reste du câble à un angle de 90 degrés par rapport au reste du câble (10), et dans lequel la force de décollement est inférieure à environ 90 newtons.

9. Procédé de fabrication d'un câble (10), comprenant :
l'avance d'une âme (20) dans une première direction, l'âme (20) comportant au moins une fibre optique (40) pouvant transporter des signaux de communication ; et
l'extrusion d'une gaine (30) autour de l'âme (20), l'extrusion comprenant :
l'introduction d'un premier matériau d'extrusion polymère dans l'appareil d'extrusion ;
l'introduction d'un premier écoulement d'un deuxième matériau d'extrusion polymère à l'intérieur du premier matériau d'extrusion polymère par un premier orifice ;
l'introduction d'un deuxième écoulement de matériau d'extrusion à l'intérieur du premier matériau d'extrusion polymère par un deuxième orifice ; et
l'opération consistant à laisser les premier et deuxième matériaux d'extrusion s'étirer et refroidir autour de l'âme, le premier matériau d'extrusion polymère formant une partie principale (50) de la gaine (30), le premier écoulement formant une première discontinuité (50) dans la partie principale, et le deuxième écoulement formant une deuxième discontinuité (50) dans la partie principale, les première et deuxième discontinuités (50) étant au moins partiellement intégrées dans la partie principale (55),
dans lequel le premier matériau d'extrusion comporte un premier polymère et le deuxième matériau d'extrusion comporte un deuxième polymère, le deuxième matériau d'extrusion comportant en outre entre 1 % et 20 % en poids du premier polymère,
dans lequel une section de la gaine (30) située entre la première et la deuxième discontinuité est séparable d'un reste de la gaine par une force de décollement sur la section inférieure à 90 newtons ;
le procédé comprenant en outre la formation d'au moins un élément de localisation tactile (60) à proximité d'au moins une des discontinuités (50).

10. Procédé de la revendication 9, dans lequel une aire de section transversale de chaque discontinuité (50) est inférieure à 5 % d'une aire de section transversale de la gaine (30).

11. Procédé de la revendication 9, dans lequel la gaine (30) a une section transversale annulaire avec une surface intérieure (34) et une surface extérieure (38), avec une épaisseur de gaine entre elles de 0,5 mm à 2,0 mm, dans lequel une hauteur de la première discontinuité (50) est au moins quatre fois supérieure à une largeur maximale de la première discontinuité (50), et dans lequel la première discontinuité (50) a une largeur maximale mesurée perpendiculairement à un rayon passant par la première discontinuité (50) qui est inférieure à 0,2 mm.

12. Procédé de la revendication 11, dans lequel le premier polymère comprend du polyéthylène et le deuxième polymère comprend du polypropylène.

13. Procédé de l'une quelconque des revendications 9 à 12, comprenant en outre l'avance d'une membrure de force allongée dans la première direction, et dans lequel la gaine (30) est extrudée autour de la membrure de force, la première discontinuité (50) étant entièrement intégrée dans la partie principale (55).
